(19) **Europäisches Patentamt / European Patent Office / Office européen des brevets**

(11) **EP 4 566 950 B1**

(12) **EUROPEAN PATENT SPECIFICATION**

(45) Date of publication and mention of the grant of the patent:
**18.03.2026 Bulletin 2026/12**

(21) Application number: **24167255.9**

(22) Date of filing: **28.03.2024**

(51) International Patent Classification (IPC):
**B64D 41/00** *(2006.01)* **B64U 50/19** *(2023.01)*
**B64D 27/02** *(2006.01)* **H01M 8/04089** *(2016.01)*

(52) Cooperative Patent Classification (CPC):
**B64D 41/00; B64D 27/02; B64U 50/19;**
B64D 2041/005; H01M 8/04089; H01M 2250/20;
Y02T 90/40

(54) **FLYING VEHICLE HAVING AUXILIARY THRUSTER AND METHOD FOR CONTROLLING AUXILIARY THRUSTER**

FLUGGERÄT MIT HILFSTRIEBWERK UND VERFAHREN ZUR STEUERUNG DES HILFSTRIEBWERKS

VÉHICULE VOLANT AYANT UN PROPULSEUR AUXILIAIRE ET PROCÉDÉ DE COMMANDE DE PROPULSEUR AUXILIAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.12.2023 KR 20230175392**

(43) Date of publication of application:
**11.06.2025 Bulletin 2025/24**

(73) Proprietors:
• **HYUNDAI MOTOR COMPANY**
**Seoul 06797 (KR)**
• **Kia Corporation**
**Seocho-gu**
**Seoul 06797 (KR)**

(72) Inventor: **HWANG, Eu Gene**
**Seoul (KR)**

(74) Representative: **Viering, Jentschura & Partner mbB**
**Patent- und Rechtsanwälte**
**Am Brauhaus 8**
**01099 Dresden (DE)**

(56) References cited:
| | |
|---|---|
| EP-A1- 3 805 107 | CN-A- 110 594 040 |
| CN-B- 112 455 698 | GB-A- 2 612 973 |
| US-A- 5 806 791 | US-A1- 2008 001 038 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 566 950 B1

## Description

## TECHNICAL FIELD

The present disclosure relates to a flying vehicle having an auxiliary thruster and a method for controlling the auxiliary thruster.

## BACKGROUND

A variety of emergency landing devices that can be used during an emergency of a flying vehicle have been proposed, and such emergency landing devices are intended to save the lives of passengers in the flying vehicle that is inoperable or face the risk of fire and explosion.

For example, a combination of parachutes and airbags deployed for an emergency landing of a flying vehicle is known. Properly deploying parachutes and airbags may ensure a gentle descent to the ground and attenuate an impact load generated when colliding with the ground as much as possible. This technology is being studied by reducing falling speed with a parachute and controlling a sink rate with an airbag in order to lower a passenger injury rate.

However, despite increased safety obtained when an emergency landing device in which the parachute and the airbag are combined are used in a flying vehicle, risks may remain. The reason is that due to the fact that the flying vehicle is inoperable and has fuel or other combustible materials, passengers must perform difficult and dangerous emergency landings along with the flying vehicle with a significant risk of explosion during an emergency landing process or during a ground collision.

CN 112 455 698 B discloses a fuel cell hydrogen spray pipe hybrid power unmanned aerial vehicle, and relates the field of aircrafts. The unmanned aerial vehicle comprises an unmanned aerial vehicle body structure, a flight control device, a signal transmission device, a loading bin, an aileron control surface, an empennage control surface and a fuel cell hydrogen spray pipe hybrid power system. When the unmanned aerial vehicle is in a cruising state, the propulsion power required by the unmanned aerial vehicle is small, and a hydrogen spray pipe does not work, hydrogen enters a fuel cell stack to generate electricity to drive an electric propeller, when the unmanned aerial vehicle needs to fly with high maneuverability, high-pressure hydrogen is input into an ejector, outside air is pumped into the ejector and mixed, mixed gas is introduced into a combustion chamber, ignited by an electric igniter and then sprayed out through a spray pipe, and large thrust is provided for the unmanned aerial vehicle.

EP 3 805 107 A1 discloses that a hybrid propulsion system for aircrafts comprises at least a fuel cell unit for providing power to drive an aircraft by using hydrogen in a redox reaction, at least a gas turbine for providing power to drive the aircraft by burning hydrogen, a hydrogen source for providing the hydrogen to the fuel cell unit and/or to the gas turbine and at least an electric propulsion unit for driving the aircraft. The electric propulsion unit is electrically powered by the fuel cell unit and/or mechanically by the gas turbine in at least two different propulsion modes. A control unit controls the power supply to the electric propulsion unit. In a first propulsion mode for a first flight phase the electric propulsion unit is essentially or only powered by the fuel cell unit, and in a second propulsion mode for a second flight phase the electric propulsion unit is essentially or only powered by the gas turbine.

US 2008/001038 A1 discloses fuel cell/combustor systems and methods for aircraft and other applications. A system in accordance with one embodiment includes a fuel cell having an outlet positioned to remove output products from the fuel cell. The system can further include a fuel supply carrying a fuel having a different composition than the output products (e.g., aviation fuel), and a combustion chamber. The combustion chamber can in turn include a first inlet coupled to the outlet of the fuel cell to receive output products from the fuel cell, and a second inlet coupled to the fuel supply to receive the fuel. At least one combustion zone can be positioned in fluid communication with the first and second inlets to burn both the output products and the fuel.

GB 2 612 973 A discloses an aircraft propulsion unit comprising a fuel cell for providing electrical power. An electric motor drives a propeller and/or a fan. A jet propulsion sub-unit provides extra thrust. Preferably, hydrogen tank supplies hydrogen to a fuel injector of the sub-unit and to the fuel cell. The electric motor may provide power to the propeller to generate thrust during cruise. A clutch may additionally enable the electric motor to drive a compressor of the sub-unit for combustion of hydrogen in combustion chamber to produce a hydrogen powered jet at exhaust nozzle, providing the extra thrust during take-off and/or climb.

CN 110 594 040 A discloses a fuel cell feeding system for a rocket engine, belongs to the technical field of rocket engines. An inlet of an electric fuel pump communicates with a fuel tank, an outlet of the electric fuel pump communicates with inlets of multiple cooling channels, and an outlet of each cooling channel communicates with an anode inlet of a solid oxide fuel cell and a fuel injector; and an inlet of an electric oxidizing agent pump communicates with an oxidizing agent tank, an outlet of the electric oxidizing agent pump communicates with a cathode inlet of the solid oxide fuel cell and an oxidizing agent injector separately, the solid oxide fuel cell is electrically connected with an electric energy control distribution system, the electric energy control distribution system is electrically connected with a storage battery and a motor separately, and the motor, the electric oxidizing agent pump and the electric fuel pump are coaxially and fixedly connected.

SUMMARY

The present disclosure relates to a flying vehicle having an auxiliary thruster according to claim 1. Particular embodiments relate to a flying vehicle having an auxiliary thruster that may protect passengers inside by reducing an impact load through auxiliary thrust force obtained using fuel from a fuel cell during an emergency.

The fuselage may be provided with at least one rotor, and the fuel cell may provide thrust force to the fuselage by applying power to a drive motor of the rotor.

The fuel cell may include a fuel tank provided in the fuselage and configured to store the fuel, a compressor configured to pressurize air received from an air inlet of the fuselage to a predetermined pressure, and a fuel cell stack configured to electrochemically react the fuel with oxygen in the air to generate electricity.

The auxiliary thruster may include a combustion chamber configured to receive the fuel from the fuel tank and to receive air from the compressor, a nozzle connected to the combustion chamber to eject the combustion gas generated in the combustion chamber, and a plurality of vanes disposed at regular intervals from each other in the nozzle and configured to vary a posture thereof to control an ejection direction of the combustion gas.

A first fuel supply line may be connected between the fuel tank and the fuel cell stack, a second fuel supply line may be connected between the first fuel supply line and the combustion chamber, a first valve may be disposed between the first fuel supply line and the second fuel supply line, a first air supply line may be connected between the compressor and the fuel cell stack, a second air supply line may be connected between the first air supply line and the combustion chamber, and a second valve may be disposed between the first air supply line and the second air supply line.

The flying vehicle may further include a fuel pump installed in the second fuel supply line and configured to control a mass flow rate of the fuel supplied to the combustion chamber.

The sensing unit may include a sensor configured to sense a posture of the fuselage and a sensor configured to measure an altitude of the flying vehicle.

The controller may be configured to determine an angle of the vane from a current posture of the flying vehicle input from the sensing unit and control an operation of a driver connected to the vane to control the ejection direction of the combustion gas discharged from the nozzle.

The ejection direction of the combustion gas may be maintained to have a right angle to the ground.

At least one of the auxiliary thrusters may be coupled to a lower portion of the fuselage, and the auxiliary thruster may be at least partially embedded in the fuselage.

The fuel may be hydrogen or a hydrogen compound.

According to an embodiment of the present disclosure, an impact load may be reduced by auxiliary thrust force obtained by ejecting combustion gas generated by burning fuel of a fuel cell into a nozzle, thereby improving the safety of passengers even during an emergency.

## BRIEF DESCRIPTION OF THE DRAWINGS

The above and other aspects, features, and advantages of embodiments of the present disclosure will be more clearly understood from the following detailed description, taken in conjunction with the accompanying drawings, in which:

FIG. 1 is a side view illustrating a flying vehicle according to embodiments of the present disclosure;

FIG. 2 is a block diagram illustrating a main portion of a flying vehicle according to embodiments of the present disclosure;

FIG. 3 is a view illustrating a nozzle of an auxiliary thruster;

FIG. 4 is a view illustrating an operation of an auxiliary thruster during an emergency of a flying vehicle; and

FIG. 5 is a flowchart illustrating a method for controlling an auxiliary thruster according to embodiments of the present disclosure.

## DETAILED DESCRIPTION OF ILLUSTRATIVE EMBODIMENTS

Hereinafter, embodiments of the present disclosure will be described in detail with reference to the accompanying drawings. In adding reference numerals to elements of each of the drawings, although the same elements are illustrated in other drawings, like reference numerals may refer to like elements.

In the present specification, the terms such as "first," "second," or "third" may be used to describe various elements, but these elements are not limited in order, size, position, or importance by terms such as "first," "second," and "third," and these terms may be used for distinguishing one component from other components.

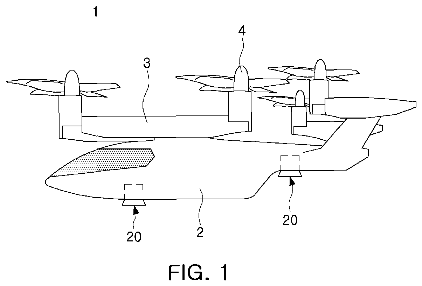

FIG. 1 is a side view illustrating a flying vehicle according to embodiments of the present disclosure.

First, in the present specification, a flying vehicle 1 may refer to a vehicle configured to fly and move over the air. In other words, the flying vehicle may refer to a rotorcraft, a drone, a tilt rotor aircraft, a vertical take-off and landing aircraft, a fixed-wing aircraft, and the like, and may also include a vehicle that may move on the ground using wheels and fly with the wheels separated from the ground.

Furthermore, the flying vehicle may also include a manned flying vehicle and an unmanned flying vehicle. The manned flying vehicle may include a fuselage that can operate by autonomous flight in addition to a fuselage controlled by a pilot.

For example, the flying vehicle 1 may include a fuselage 2 in which a boarding space is arranged, wings 3 mounted on the fuselage, and a plurality of rotors 4 provided on the wings 3. The plurality of rotors 4 may be rotated by respective drive motors thereof.

Some of the plurality of rotors 4 may be formed as tilting rotors capable of tilting upward or forward for lifting or cruising the fuselage 2, and the others thereof may be formed as lifting rotors for lifting the fuselage 2.

The rotors 4 may be configured so that at least two rotors may be disposed on the left and right wings 3 with respect to a center of the fuselage 2, respectively, but the position and number of rotors are not necessarily limited thereto. Additionally, in a wingless rotorcraft such as a helicopter, one rotor may be disposed on the fuselage.

The fuselage 2 may accommodate multiple passengers, and the fuselage 2 may allow vertical takeoff and landing and horizontal cruising due to a tilting rotor.

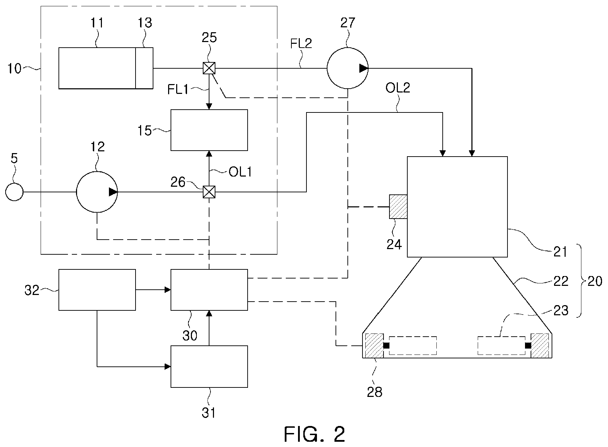

FIG. 2 is a block diagram illustrating a main portion of a flying vehicle according to embodiments of the present disclosure. As illustrated, the flying vehicle 1 according to an embodiment of the present disclosure may include a fuel cell 10 and an auxiliary thruster 20.

The fuel cell 10 may be installed in the fuselage 2 and may provide power to the fuselage 2. Furthermore, by applying power to the drive motor from the fuel cell 10, thrust force may be supplied to the fuselage 2 by the plurality of rotors 4.

The fuel cell 10 may electrochemically react fuel, such as hydrogen or a hydrogen compound, with oxygen in the air, and may directly convert chemical energy of fuel into electrical energy. Accordingly, the flying vehicle 1 according to an embodiment of the present disclosure may be an electric thrusting vehicle that is propelled by generating electricity through the fuel cell 10 during flight and applying power to the drive motor of the rotor 4.

More specifically, for example, in an anode or a fuel electrode of the fuel cell 10 using hydrogen and oxygen, hydrogen is decomposed into two hydrogen ions and two electrons. The electrons move through a conductor to a cathode or an air electrode, and hydrogen ions pass through an electrolyte and move to the cathode. In the cathode, the moved hydrogen ions, electrons, and oxygen react to generate liquid water, heat, and electrical energy. The fuel cell 10 uses such a movement of electrons as power.

For this purpose, the fuel cell 10 may include a fuel tank 11 provided in the fuselage 2 and formed as a pressure vessel to store fuel and a compressor 12 pressurizing the air received from an air inlet 5 of the fuselage 2 to a predetermined pressure.

High-purity fuel compressed and stored in the fuel tank 11 may be depressurized by a regulator 13 and may be supplied to a fuel cell stack 15 through a first fuel supply line FL1. Optionally, fuel remaining after being consumed for power generation of the fuel cell stack may be returned to the first fuel supply line FL1 and may then be provided back to the fuel cell stack 15.

Air may be supplied to the fuel cell stack 15 through the compressor 12 and the first air supply line OL1. The air remaining after being consumed in the power generation of the fuel cell stack may be discharged to the outside air.

The fuel cell stack 15 may be assembled by stacking a plurality of unit cells. Each unit cell may be provided with an electrolyte membrane that can move hydrogen ions and an anode and a cathode each sintered on both surfaces of the electrolyte membrane. Furthermore, the fuel cell stack 15 may further include a gas-impermeable separator having a flow path for providing gas, that is, hydrogen and oxygen, to each electrode.

For example, direct current electricity generated by the fuel cell stack 15 may be converted to alternating current electricity by an inverter and then output, and it may rotate the rotor 4 by driving the drive motor. Accordingly, thrust force may be supplied to the fuselage 2.

However, embodiments of the present disclosure are not necessarily limited thereto, and when a direct current motor is adopted as the drive motor, direct current electricity generated by the fuel cell stack 15 may be output without an inverter, and the rotor 4 may be rotated by driving the drive motor.

Optionally, the flying vehicle 1 according to an embodiment of the present disclosure may further include a secondary battery (not illustrated), and when the drive motor is not driven, electricity generated by the fuel cell stack 15 may be supplied to the secondary battery and stored. Moreover, as an application of stable power is required, a DC/DC converter may be adopted when voltage is boosted or decreased.

The auxiliary thruster 20 may provide auxiliary thrust force to the fuselage 2 by burning and ejecting the fuel supplied to the fuel cell 10. For this purpose, the auxiliary thruster may include a combustion chamber 21, a nozzle 22, and a plurality of vanes 23, and it may be configured and operated independently of a main thruster including a drive motor and a rotor 4.

On the other hand, the auxiliary thruster 20 may be connected to the first fuel supply line FL1 and the fuel tank 11 constituting the fuel cell 10 through a second fuel supply line FL2, and it may be connected to the first air supply line OL1 and the compressor 12 constituting the fuel cell 10 through a second air supply line OL2.

A first valve 25 may be disposed between the first fuel supply line FL1 and the second fuel supply line FL2, and a second valve 26 may be disposed between the first air supply line OL1 and the second air supply line OL2. In this case, a three-way valve may be adopted as the first valve 25 and the second valve 26, respectively.

A first port of the first valve 25 may be connected to the fuel tank 11, a second port may be connected to the fuel cell stack 15, and a third port may be connected to the combustion chamber 21 of the auxiliary thruster 20.

Furthermore, the first port of the second valve 26 may be connected to the compressor 12, the second port may be connected to the fuel cell stack 15, and the third port may be connected to the combustion chamber 21 of the auxiliary thruster 20.

When the first port and the third port communicate with each other in the first valve 25 and the first port and the third port communicate with each other in the second valve 26, in the combustion chamber 21, fuel supplied through the fuel tank 11 and the fuel supply lines FL1 and FL2 may be burned with an oxidizing agent supplied through the compressor 12 and the air supply lines OL1 and OL2, that is, oxygen in the air. The combustion chamber 21 may include an igniter 24 for igniting fuel and oxygen.

Additionally, a fuel pump 27 for adjusting the amount (mass flow rate) of fuel supplied to the combustion chamber 21 may be installed in the second fuel supply line FL2.

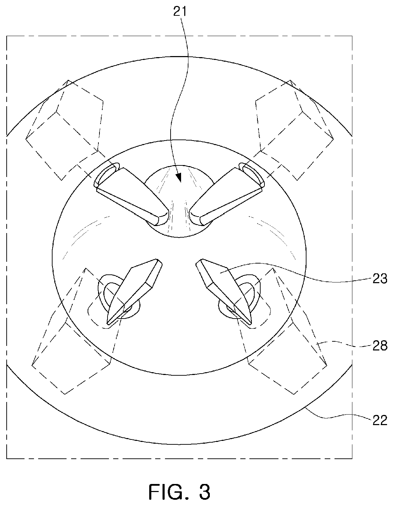

FIG. 3 is a view illustrating a nozzle of an auxiliary thruster. As illustrated in FIGS. 2 and 3, the nozzle 22 may be connected to the combustion chamber 21 and may provide auxiliary thrust force to the fuselage 2 by ejecting the combustion gas generated by combustion of fuel in the combustion chamber 21 to the outside air. The nozzle 22 may have an approximately truncated cone shape in which a lower side thereof is wider than an upper side thereof.

The combustion chamber 21 and the nozzle 22 configured in this manner may act like a kind of rocket. In other words, since the high-temperature and high-pressure combustion gas generated by combustion in the combustion chamber 21 has the characteristic of attempting to escape toward a lower pressure side, they are ejected outward through the nozzle 22, and as a reaction thereto, the fuselage 2 receives auxiliary thrust force for elevating the fuselage 2.

The plurality of vanes 23 may be disposed in the nozzle 22 at regular intervals from each other. Each of the vanes 23 may have a variable angle with respect to an axis or hypotenuse of the nozzle 22. To this end, a rotation axis of each vane 23 may be connected to a driver 28. The driver 28 may include a motor and a gear unit, and optionally, a bevel gear, etc. may be added to the gear unit as needed.

For example, the detailed configuration and operation of the vane 23 and the driver 28 applicable to the flying vehicle 1 according to an embodiment of the present disclosure are described in "Missile Jet Vane Control System and Method," published in U.S. Patent No. 5,806,791.

In this manner, as the nozzle 22 is fixed and a posture of the plurality of vanes 23 arranged in the nozzle 22 is configured to vary, the effect of suppressing an increase in a weight of the flying vehicle 1 may be expected.

At least one auxiliary thruster 20 having the combustion chamber 21 and the nozzle 22 may be coupled to a lower portion of the fuselage 2, and each auxiliary thruster may be at least partially embedded in the fuselage 2. Each auxiliary thruster may protrude from the fuselage 2 to the minimum possible level.

The flying vehicle according to an embodiment of the present disclosure includes a controller 30 configured to control an operation of the auxiliary thruster 20 during an emergency and a sensing unit 31 equipped with a plurality of sensors and electrically connected to the controller 30. Here, power may be applied to the controller 30 and the sensing unit 31 from a separate battery 32.

First, the sensing unit 31 may monitor a posture of the fuselage 2 using, for example, an inertial navigation system (INS) installed within the fuselage 2.

The INS is a device that provides navigation information such as the position, speed, and posture of the flying vehicle 1 by integrating acceleration and angular velocity measured through sensors. The sensing unit 31 may calculate a roll angle, a pitch angle, and a yaw angle from an accelerometer output and a gyroscope output of the INS, and it may monitor the posture of the flying vehicle 1 by continuously sensing changes in these angles.

Additionally, the sensing unit 31 may measure an altitude of the flying vehicle 1 using at least one of an altimeter, an accelerometer, and the global positioning system (GPS) installed within the fuselage 2. The controller 30 may calculate a sink rate of the flying vehicle 1 using an altitude value input from the sensing unit 31. The sink rate may be defined as an altitude value that changes per unit time (e.g., 1 second). The sink rate may be required to calculate auxiliary thrust force.

Furthermore, the sensing unit 31 may optionally further include a flow sensor and a pressure sensor installed in the combustion chamber 21 of the auxiliary thruster 20.

The controller 30 may be implemented with various processing devices such as a microprocessor embedded with a semiconductor chip capable of performing various operations or commands, and it may control an overall operation of the auxiliary thruster 20, thus providing the auxiliary thrust force required for the flying vehicle 1 during an emergency.

For example, the controller 30 may be integrated into an upper control system of the flying vehicle 1 or may be used concurrently. Additionally, the controller 30 may be electrically connected to various sensors of the sensing unit 31.

Specifically, the controller 30 independently may determine the failure or falling of the flying vehicle 1, or it may generate an alarm according to a determination result input from the upper control system.

For example, based on an inoperable failure signal input from the drive motor for the rotor 4 of the flying vehicle 1, or a falling signal input from an altimeter, an accelerometer, GPS, INS, and the like, of the sensing unit 31 in consideration of a sink rate according to weight, the controller 30 may determine that the flying vehicle 1 is in an emergency situation.

The controller 30 may be electrically connected to an alarm unit provided in the fuselage 2. This alarm unit may generate a visual and/or auditory alarm to display and inform passengers in the fuselage of an emergency situation in the flying vehicle 1.

Accordingly, the controller 30 may command an operation of the first valve 25 and the second valve 26, the fuel pump 27, the igniter 24, and a motor in the driver 28 of the vane 23, for operation of the auxiliary thruster 20 in an emergency situation.

Additionally, the controller 30 calculates a current sink rate from a current altitude value of the flying vehicle 1 input from an altimeter, an accelerometer, and GPS of the sensing unit 31. Next, the controller 30 compares a current sink rate with a predetermined required sink rate that the flying vehicle 1 can handle during an emergency, and from a difference between the sink rates, the controller 30 calculates the auxiliary thrust force required for the flying vehicle 1 for gentle falling. Moreover, the controller 30 may determine the amount of fuel and air for obtaining the required auxiliary thrust force.

The controller 30 may control an operation of the first valve 25 and the second valve 26, it may supply fuel from the fuel tank 11 and the first fuel supply line FL1 constituting the fuel cell 10 to the combustion chamber 21 of the auxiliary thruster 20 via the second fuel supply line FL2, and it may supply air from the compressor 12 and the first air supply line OL1 constituting the fuel cell to the combustion chamber 21 via the second air supply line OL2. Specifically, the controller 30 may control an operation of the fuel pump 27 and the compressor 12 to adjust the amount of fuel and oxygen in the air.

The controller 30 may be electrically connected to the igniter 24 of the combustion chamber 21 to control an operation thereof, and it may allow the igniter 24 in the combustion chamber 21 to ignite the fuel and oxygen, thus allowing for an occurrence of combustion. Optionally, the controller 30 may feedback control an operation of the fuel pump 27 and the compressor 12 until the flow rate and pressure of combustion gas in the combustion chamber 21 sensed by the flow sensor and the pressure sensor of the sensing unit 31 reach a target value.

Furthermore, the controller 30 may determine an angle of the vane 23 in the nozzle 22 from a current posture of the flying vehicle 1 input from the INS of the sensing unit 31, and it may control an ejection direction of combustion gas discharged from the nozzle 22 by controlling the operation of the motor in the driver 28 connected to the vane 23. The ejection direction of the combustion gas may be approximately perpendicular to the ground.

Additionally, the controller 30 may include a timer or be electrically connected to the timer to obtain time data from the timer.

The flying vehicle 1 according to an embodiment of the present disclosure, configured as described above, may drive the first valve 25 during a normal operation to allow fuel, that is, hydrogen or a hydrogen compound, to flow into the fuel cell stack 15 of the fuel cell 10, and it may drive the second valve 26 together with the compressor 12 to allow oxygen in the air to flow into the fuel cell stack 15 of the fuel cell 10.

In this manner, the flying vehicle 1 according to an embodiment of the present disclosure may generate electricity by the fuel cell 10 during flight and may allow power to be applied to the drive motor of the rotor 4, thereby providing thrust force and enabling navigation.

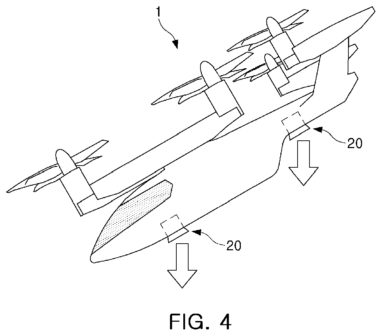

FIG. 4 is a view illustrating an operation of an auxiliary thruster during an emergency of a flying vehicle.

For example, when the flying vehicle 1 according to an embodiment of the present disclosure falls rather rapidly due to reasons such as failure, under the control of the controller 30, a flow path may be changed by the first valve 25 to allow the fuel to flow into the combustion chamber 21 of the auxiliary thruster 20, and the flow path may be changed by the second valve 26 to allow oxygen in the air to flow into the combustion chamber of the auxiliary thruster 20.

The igniter 24 in the combustion chamber 21 may ignite fuel and oxygen to generate combustion, the high-temperature and high-pressure combustion gas generated by combustion may be ejected into the outside air through the nozzle 22, and as a reaction thereto, the fuselage 2 may receive auxiliary thrust force that elevates the fuselage and alleviates rapid descent.

In the case of an emergency, when the flying vehicle 1 receives the auxiliary thrust force, this helps to maintain operating speed and an altitude, and furthermore, there is an advantage of being able to extend the flight time necessary to select a safe landing site.

In this manner, the flying vehicle 1 according to an embodiment of the present disclosure may ensure a gentle descent to the ground by the auxiliary thrust force that elevates the fuselage 2, and it may maximally attenuate an impact load generated in the event of a collision with the ground, thereby increasing a chance of a smooth and safe landing and protecting passengers in the flying vehicle 1.

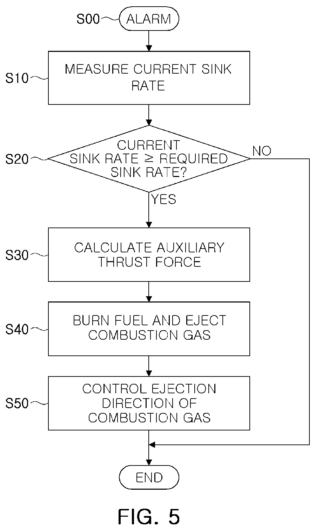

FIG. 5 is a flowchart illustrating a method for controlling an auxiliary thruster according to embodiments of the present disclosure.

The method for controlling the auxiliary thruster 20 according to an embodiment of the present disclosure may include an operation of measuring a current sink rate of a flying vehicle 1 during an emergency (S10), an operation of calculating auxiliary thrust force for reducing a sink rate when the current sink rate is greater than or equal to a required sink rate (S30), and an operation of commanding combustion gas to be generated and ejected by supplying at least a portion of fuel to be supplied to a fuel cell 10 of the flying vehicle 1 to an auxiliary thruster 20 and burning the at least a portion of fuel (S40).

The controller 30 itself may determine the failure or fall of the flying vehicle 1, and it may generate an alarm informing an emergency situation of the flying vehicle according to a determination result input from an upper control system (S00).

For example, based on an inoperable failure signal input from the drive motor for the rotor 4 of the flying vehicle 1 or a falling signal input from an altimeter, an accelerometer, GPS, INS, and the like of the sensing unit in consideration of a sink rate according to weight, the controller 30 may determine that the flying vehicle 1 is in an emergency situation.

Accordingly, the controller 30 may drive an alarm unit, and the alarm unit may generate a visual and/or audible alarm to inform passengers in the fuselage 2 of an emergency situation of the flying vehicle 1.

Actually, the control of the auxiliary thruster 20 according to an embodiment of the present disclosure may be performed when an altitude value input from the altimeter, the accelerometer, the GPS, and the like of the sensing unit 31 in an emergency situation of the flying vehicle 1 is in, for example, at least 100 m.

In an emergency of the flying vehicle 1, the controller 30 may measure the current sink rate of the flying vehicle (S10). The sensing unit 31 may measure the altitude of the flying vehicle 1 using at least one of the altimeter, the accelerometer, and the GPS installed in the fuselage 2. The controller 30 may calculate a sink rate of the fuselage 2 using an altitude value input from the sensing unit 31. The sink rate may be defined as an altitude value that changes per unit time (e.g., 1 second).

Then, the controller 30 may compare the current sink rate with a predetermined required sink rate that the flying vehicle 1 can handle during an emergency (S20).

When the current sink rate is greater than or equal to the required sink rate, the controller 30 may calculate the auxiliary thrust force required by the flying vehicle 1 so as to induce a gentle descent by reducing the sink rate (S30). The auxiliary thrust force determined by the difference between the current sink rate and the required sink rate may be obtained by Equation 1 below.
Equation 1:

$$T = m \times \frac{(Vz1 - Vz2)}{t} \quad \text{...... Equation 1}$$

Here, T is auxiliary thrust force (N), m is a mass (kg) of the flying vehicle 1 including passenger(s), Vz1 is a current sink rate (m/s), Vz2 is a required sink rate (m/s), and t is the time (s). The required sink rate Vz2 may be determined in advance as a predetermined value, and it may be, for example, approximately 13 m/s.

When the current sink rate is less than the required sink rate, the controller 30 may terminate the control of the auxiliary thruster 20 for reducing the sink rate.

Next, the controller 30 may supply at least a portion of the fuel to be supplied to the fuel cell 10 of the flying vehicle 1 to the auxiliary thruster 20 and burn the at least a portion of the fuel, thus generating and ejecting combustion gas to provide the auxiliary thrust force (S40).

To this end, the controller 30 may transmit a control command to the first valve 25 and the second valve 26, and it may specifically transmit the control command to the fuel pump 27 and the compressor 12, thus controlling the amount (mass flow rate) of fuel and air.

Furthermore, the controller 30 may determine a mass flow rate of oxygen in the air and the fuel for obtaining the required auxiliary thrust force.

The auxiliary driving force may be expressed by Equation 2 below.
Equation 2:

$$T = \dot{m} V_e + (p_e - p_a) A_e \quad \text{...... Equation 2}$$

Here, $\dot{m}$ is a mass flow rate (kg/s) of the combustion gas, $V_e$ is the nozzle outlet speed (m/s) of the combustion gas, $P_e$ is the nozzle outlet pressure (bar) of the combustion gas, $P_a$ is atmospheric pressure (about 1 bar), and $A_e$ is a nozzle outlet area (m$^2$).

For example, when fuel, oxygen, and a pressure ratio (pressure in the combustion chamber) are determined, these variables may be obtained through the Chemical Equilibrium with Applications (CEA) provided by NASA in the United States. Furthermore, when only an area of a nozzle throat is determined in addition to these variables, the mass flow rate of the combustion gas may also be determined.

Accordingly, the controller 30 may determine and adjust the mass flow rate of oxygen in the air and fuel so as to form the mass flow rate of the combustion gas for obtaining the required auxiliary thrust force.

For example, an appropriate mass flow of fuel and oxygen corresponding to the required auxiliary thrust force may be determined by being extracted from a database obtained in advance numerically or experimentally, along with a mixing ratio (F/A) which is a mass ratio of fuel to oxygen. Then, the controller may control an operation of the fuel pump 27 and the compressor 12 and control the amount (mass flow) of fuel and air by a determined value.

Furthermore, the controller 30 may transmit a control command for controlling an operation of the igniter 24 in the combustion chamber 21 to the igniter 24, and it may allow the igniter 24 in the combustion chamber 21 to ignite the fuel and oxygen, thus allowing for an occurrence of combustion. Optionally, the controller 30 may feedback control an operation of the fuel pump 27 and the compressor 12 until the flow rate and pressure of combustion gas in the combustion chamber sensed by the flow sensor and the pressure sensor of the sensing unit 31 reach a target value.

Additionally, the controller 30 may determine an angle of the vane 23 in the nozzle 22 from a current posture of the flying vehicle 1 input from the INS, and it may control an operation of the motor in the driver 28 connected to the vane to control the ejection direction of the combustion gas discharged from the nozzle (S50). A posture of each vane 23 may be changed so that the ejection direction of the combustion gas is maintained in a direction substantially perpendicular to the ground.

In this manner, the flying vehicle according to an embodiment of the present disclosure may ensure the gentle descent to the ground by the auxiliary thrust force for elevating the fuselage, and it may maximally attenuate the impact load generated in the event of a collision with the ground, thereby increasing a chance of a smooth and safe landing and protecting passengers in the flying vehicle. Accordingly, embodiments of the present disclosure may have the effect of improving the safety of passengers even during an emergency.

The aforementioned description merely illustrates the technical concept of the present disclosure, and a person skilled in the art to which the present invention pertains may make various modifications and modifications without departing from the essential characteristics of the present disclosure.

Therefore, the example embodiments disclosed in this specification and drawings are not intended to limit but to explain the technical concept of the present disclosure, and the scope of the technical idea of the present disclosure is not limited by these example embodiments. The scope of protection of the present disclosure should be interpreted by the following claims.

**Claims**

1. A flying vehicle (1) comprising:

   a fuel cell (10) installed in a fuselage (2) and configured to supply power to the fuselage (2);
   an auxiliary thruster (20) installed in the fuselage (2) and configured to provide an auxiliary thrust force by ejecting combustion gas generated by burning a portion of fuel to be supplied to the fuel cell (10);
   a controller (30) configured to control an operation of the auxiliary thruster (20) during an emergency; and
   a sensing device (31) comprising a plurality of sensors electrically connected to the controller (30),
   **characterized in that** the controller (30) is configured to:

   calculate a current sink rate from a current altitude value of the flying vehicle (1) input from the sensing device (31);
   compare the current sink rate with a predetermined required sink rate during the emergency; and
   calculate the auxiliary thrust force required for the flying vehicle (1) from a difference between the current sink rate and the required sink rate.

2. The flying vehicle (1) according to claim 1, wherein:

   the fuselage (2) comprises a rotor (4); and
   the fuel cell (10) is configured to provide a thrust force to the fuselage (2) by applying power to a drive motor of the rotor (4).

3. The flying vehicle (1) according to claim 1 or 2, wherein the fuel cell (10) comprises:

   a fuel tank (11) disposed in the fuselage (2) and configured to store the fuel;
   a compressor (12) configured to pressurize air received from an air inlet (5) of the fuselage (2) to a predetermined pressure; and
   a fuel cell stack (15) configured to electrochemically react the fuel with oxygen in the air to generate electricity.

4. The flying vehicle (1) according to claim 3, wherein the auxiliary thruster (20) comprises:

   a combustion chamber (21) configured to receive the fuel from the fuel tank (11) and to receive the air from the compressor (12);
   a nozzle (22) connected to the combustion chamber (21) to eject the combustion gas generated in the combustion chamber (21); and
   a plurality of vanes (23) disposed at regular intervals from each other in the nozzle (22) and configured to vary a posture thereof to control an ejection direction of the combustion gas.

5. The flying vehicle (1) according to claim 4, wherein:

   a first fuel supply line (FL1) is connected between the fuel tank (11) and the fuel cell stack (15), a second fuel supply line (FL2) is connected between the first fuel supply line (FL1) and the combustion chamber (21), and a first valve (25) is disposed between the first fuel supply line (FL1) and the second fuel supply line (FL2); and
   a first air supply line (OL1) is connected between the compressor (12) and the fuel cell stack (15), a second air supply line (OL2) is connected between the first air supply line (FL1) and the combustion chamber (21), and a second valve (26) is disposed between the first air supply line (OL1) and the second air supply line (OL2).

6. The flying vehicle (1) according to claim 5, further comprising a fuel pump (27) disposed in the second fuel supply line (FL2) and configured to control a mass flow rate of the fuel supplied to the combustion chamber (21).

7. The flying vehicle (1) according to claim 1, wherein the sensing device comprises:

   a first sensor configured to sense a posture of the fuselage (2); and
   a second sensor configured to measure an altitude of the flying vehicle (1).

8. The flying vehicle (1) according to claim 1 or 7, wherein the controller (30) is configured to:

   determine an angle of each of the vanes (23) from a current posture of the flying vehicle (1) input from the sensing device; and
   control an operation of drivers respectively connected to the vanes (23) to control the ejection direction of the combustion gas discharged from the nozzle (22).

9. The flying vehicle (1) according to any one of claims 4 to 6 or according to claim 8, wherein the ejection direction of the combustion gas is maintained to have a right angle to a ground surface.

10. The flying vehicle (1) according to any one of claims 1 to 9, wherein:

    the auxiliary thruster (20) is coupled to a lower portion of the fuselage (2); and
    the auxiliary thruster (20) is partially embedded in the fuselage.

11. The flying vehicle (1) according to any one of claims 1 to 10, wherein the fuel is hydrogen or a hydrogen compound.

**Patentansprüche**

1. Flugfahrzeug (1), aufweisend:

   eine Brennstoffzelle (10), die in einem Rumpf (2) installiert ist und konfiguriert ist, um den Rumpf (2) mit Energie zu versorgen, eine Zusatzschubdüse (20), die im Rumpf (2) installiert ist und konfiguriert ist, um eine zusätzliche Schubkraft bereitzustellen durch Ausstoßen von Brenngas, das durch Verbrennen eines Teils von der Brennstoffzelle (10) zuzuführendem Brennstoff erzeugt wird,
eine Steuereinrichtung (30), die konfiguriert ist, um einen Betrieb der Zusatzschubdüse (20) während eines Notfalls zu steuern, und
eine Erfassungsvorrichtung (31), aufweisend eine Mehrzahl von Sensoren, die elektrisch mit der Steuereinrichtung (30) verbunden sind, **dadurch gekennzeichnet, dass** die Steuereinrichtung (30) konfiguriert ist, um
eine aktuelle Sinkgeschwindigkeit aus einem aktuellen Höhenwert des Flugfahrzeugs (1) zu berechnen, der aus der Erfassungsvorrichtung (31) eingegeben wird,
die aktuelle Sinkgeschwindigkeit mit einer vorbestimmten erforderlichen Sinkgeschwindigkeit während des Notfalls zu vergleichen, und
die für das Flugfahrzeug (1) erforderliche zusätzliche Schubkraft aus einer Differenz zwischen der aktuellen Sinkgeschwindigkeit und der erforderlichen Sinkgeschwindigkeit zu berechnen.

2. Flugfahrzeug (1) gemäß Anspruch 1, wobei:

   der Rumpf (2) einen Rotor (4) aufweist und
   die Brennstoffzelle (10) konfiguriert ist, um dem Rumpf (2) eine Schubkraft bereitzustellen durch Aufbringen von Energie auf einen Antriebsmotor des Rotors (4).

3. Flugfahrzeug (1) gemäß Anspruch 1 oder 2, wobei die Brennstoffzelle (10) aufweist:

   einen Brennstofftank (11), der im Rumpf (2) angeordnet ist und konfiguriert ist, um den Brennstoff zu speichern,
   einen Kompressor (12), der konfiguriert ist, um aus einem Lufteinlass (5) des Rumpfes (2) aufgenommene Luft auf einen vorbestimmten Druck mit Druck zu beaufschlagen, und
   einen Brennstoffzellenstapel (15), der konfiguriert ist, um den Brennstoff mit Sauerstoff in der Luft zum Erzeugen von Strom elektrochemisch in Reaktion zu bringen.

4. Flugfahrzeug (1) gemäß Anspruch 3, wobei die Zusatzschubdüse (20) aufweist:

   eine Brennkammer (21), die konfiguriert ist, um den Brennstoff aus dem Brennstofftank (11) aufzunehmen und die Luft aus dem Kompressor (12) aufzunehmen,
   eine Düse (22), die mit der Brennkammer (21) verbunden ist, um das in der Brennkammer (21) erzeugte Brenngas auszustoßen, und

eine Mehrzahl von Schaufeln (23), die in regelmäßigen Abständen voneinander in der Düse (22) angeordnet sind und konfiguriert sind, um eine Lage davon zu variieren, um eine Ausstoßrichtung des Brenngases zu steuern.

5.  Flugfahrzeug (1) gemäß Anspruch 4, wobei:

    eine erste Brennstoffzuführleitung (FL1) zwischen dem Brennstofftank (11) und dem Brennstoffzellenstapel (15) angeschlossen ist, eine zweite Brennstoffzuführleitung (FL2) zwischen der ersten Brennstoffzuführleitung (FL1) und der Brennkammer (21) angeschlossen ist und ein erstes Ventil (25) zwischen der ersten Brennstoffzuführleitung (FL1) und der zweiten Brennstoffzuführleitung (FL2) angeordnet ist, und eine erste Luftzuführleitung (OL1) zwischen dem Kompressor (12) und dem Brennstoffzellenstapel (15) angeschlossen ist, eine zweite Luftzuführleitung (OL2) zwischen der ersten Luftzuführleitung (FL1) und der Brennkammer (21) angeschlossen ist und ein zweites Ventil (26) zwischen der ersten Luftzuführleitung (OL1) und der zweiten Luftzuführleitung (OL2) angeordnet ist.

6.  Flugfahrzeug (1) gemäß Anspruch 5, ferner aufweisend eine Brennstoffpumpe (27), die in der zweiten Brennstoffzuführleitung (FL2) angeordnet ist und konfiguriert ist, um eine Massenströmungsrate des der Brennkammer (21) zugeführten Brennstoffs zu steuern.

7.  Flugfahrzeug (1) gemäß Anspruch 1, wobei die Erfassungsvorrichtung aufweist:

    einen ersten Sensor, der konfiguriert ist, um eine Lage des Rumpfs (2) zu erfassen, und einen zweiten Sensor, der konfiguriert ist, um eine Höhe des Flugfahrzeugs (1) zu messen.

8.  Flugfahrzeug (1) gemäß Anspruch 1 oder 7, wobei die Steuereinrichtung (30) konfiguriert ist, um:

    einen Winkel von jeder der Schaufeln (23) aus einer von der Erfassungsvorrichtung eingegebenen aktuellen Lage des Flugfahrzeugs (1) zu ermitteln, und einen Betrieb von Antrieben zu steuern, die jeweils mit den Schaufeln (23) verbunden sind, um die Ausstoßrichtung des aus der Düse (22) ausgestoßenen Brenngases zu steuern.

9.  Flugfahrzeug (1) gemäß irgendeinem der Ansprüche 4 bis 6 oder gemäß Anspruch 8, wobei die Ausstoßrichtung des Brenngases aufrechterhalten wird, um einen rechten Winkel zu einer Bodenfläche zu haben.

10. Flugfahrzeug (1) gemäß irgendeinem der Ansprüche 1 bis 9, wobei:

    die Zusatzschubdüse (20) mit einem unteren Abschnitt des Rumpfes (2) verbunden ist, und die Zusatzschubdüse (20) teilweise in den Rumpf eingebettet ist.

11. Flugfahrzeug (1) gemäß irgendeinem der Ansprüche 1 bis 10, wobei der Brennstoff Wasserstoff oder eine Wasserstoffverbindung ist.

**Revendications**

1.  Véhicule volant (1), comprenant :

    une pile à combustible (10) installée dans un fuselage (2) et configurée pour alimenter le fuselage (2) en énergie ; un propulseur auxiliaire (20) installé dans le fuselage (2) et configuré pour fournir une force de poussée auxiliaire en éjectant du gaz de combustion généré par la combustion d'une partie du combustible à fournir à la pile à combustible (10) ; un contrôleur (30) configuré pour contrôler un fonctionnement du propulseur auxiliaire (20) pendant une urgence ; et un dispositif de détection (31) comprenant une pluralité de capteurs connectés électriquement au contrôleur (30), **caractérisé en ce que** le contrôleur (30) est configuré pour :

    calculer un taux de descente actuel à partir d'une valeur d'altitude actuelle du véhicule volant (1) entrée à partir du dispositif de détection (31) ; comparer le taux de descente actuel avec un taux de descente requis prédéterminé pendant l'urgence ; et calculer la force de poussée auxiliaire requise pour le véhicule volant (1) à partir d'une différence entre le taux de descente actuel et le taux de descente requis.

2.  Véhicule volant (1) selon la revendication 1, dans lequel :

    le fuselage (2) comprend un rotor (4) ; et la pile à combustible (10) est configurée pour fournir une force de poussée au fuselage (2) en appliquant une puissance à un moteur d'entraînement du rotor (4).

3.  Véhicule volant (1) selon la revendication 1 ou 2, dans lequel la pile à combustible (10) comprend :

> un réservoir de combustible (11) disposé dans le fuselage (2) et configuré pour stocker le combustible ;
> un compresseur (12) configuré pour mettre sous pression l'air reçu d'une entrée d'air (5) du fuselage (2) à une pression prédéterminée ; et
> un empilement de pile à combustible (15) configuré pour faire réagir électrochimiquement le combustible avec l'oxygène de l'air afin de générer de l'électricité.

4. Véhicule volant (1) selon la revendication 3, dans lequel le propulseur auxiliaire (20) comprend :

> une chambre de combustion (21) configurée pour recevoir le combustible provenant du réservoir de combustible (11) et pour recevoir l'air provenant du compresseur (12) ;
> une buse (22) reliée à la chambre de combustion (21) pour éjecter le gaz de combustion généré dans la chambre de combustion (21) ; et
> une pluralité d'ailettes (23) disposées à intervalles réguliers les unes par rapport aux autres dans la buse (22) et configurées pour faire varier une posture de celles-ci afin de contrôler une direction d'éjection du gaz de combustion.

5. Véhicule volant (1) selon la revendication 4, dans lequel :

> une première conduite d'alimentation en combustible (FL1) est raccordée entre le réservoir de combustible (11) et l'empilement de piles à combustible (15), une deuxième conduite d'alimentation en combustible (FL2) est raccordée entre la première conduite d'alimentation en combustible (FL1) et la chambre de combustion (21), et une première vanne (25) est disposée entre la première conduite d'alimentation en combustible (FL1) et la deuxième conduite d'alimentation en combustible (FL2) ; et
> une première conduite d'alimentation en air (OL1) est raccordée entre le compresseur (12) et l'empilement de pile à combustible (15), une deuxième conduite d'alimentation en air (OL2) est raccordée entre la première conduite d'alimentation en air (FL1) et la chambre de combustion (21), et une deuxième vanne (26) est disposée entre la première conduite d'alimentation en air (OL1) et la deuxième conduite d'alimentation en air (OL2).

6. Véhicule volant (1) selon la revendication 5, comprenant en outre une pompe à combustible (27) disposée dans la deuxième conduite d'alimentation en combustible (FL2) et configurée pour contrôler un débit massique du combustible fourni à la chambre de combustion (21).

7. Véhicule volant (1) selon la revendication 1, dans lequel le dispositif de détection comprend :

> un premier capteur configuré pour détecter une posture du fuselage (2) ; et
> un deuxième capteur configuré pour mesurer une altitude du véhicule volant (1).

8. Véhicule volant (1) selon la revendication 1 ou 7, dans lequel le contrôleur (30) est configuré pour :

> déterminer un angle de chacune des ailettes (23) à partir d'une posture actuelle du véhicule volant (1) entrée à partir du dispositif de détection ; et
> contrôler un fonctionnement d'entraînements respectivement connectés aux ailettes (23) afin de contrôler la direction d'éjection du gaz de combustion évacué de la buse (22).

9. Véhicule volant (1) selon l'une quelconque des revendications 4 à 6 ou selon la revendication 8, dans lequel la direction d'éjection du gaz de combustion est maintenue pour avoir un angle droit par rapport à une surface du sol.

10. Véhicule volant (1) selon l'une quelconque des revendications 1 à 9, dans lequel :

> le propulseur auxiliaire (20) est couplé à une partie inférieure du fuselage (2) ; et
> le propulseur auxiliaire (20) est partiellement encastré dans le fuselage.

11. Véhicule volant (1) selon l'une quelconque des revendications 1 à 10, dans lequel le combustible est de l'hydrogène ou un composé d'hydrogène.

FIG. 1

FIG. 2

FIG. 3

FIG. 4

S00 — ( ALARM )

S10 — MEASURE CURRENT SINK RATE

S20 — CURRENT SINK RATE ≥ REQUIRED SINK RATE? — NO

YES

S30 — CALCULATE AUXILIARY THRUST FORCE

S40 — BURN FUEL AND EJECT COMBUSTION GAS

S50 — CONTROL EJECTION DIRECTION OF COMBUSTION GAS

( END )

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112455698 B
- EP 3805107 A1
- US 2008001038 A1
- GB 2612973 A
- CN 110594040 A
- US 5806791 A